# EUROPEAN PATENT SPECIFICATION

(11) **EP 3 127 419 B1**
(45) Date of publication and mention of the grant of the patent: **12.02.2020**
(21) Application number: 16182203.6
(22) Date of filing: 01.08.2016
(51) Int. Cl.: A01D 89/00, A01D 90/04, A01B 29/04

(54) **HARVESTING DEVICE**
ENTNAHMEVORRICHTUNG
DISPOSITIF DE RÉCOLTE

(30) Priority: 03.08.2015 DK 201500439
(43) Date of publication of application: 08.02.2017
(73) Proprietor: Laursen, Niels Kjær, 8740 Brædstrup (DK)
(72) Inventor: Laursen, Niels Kjær, 8740 Brædstrup (DK)
(74) Representative: Rottenberg, Annabell Simone

(56) References cited:
- DE-A1- 3 327 362
- DE-B1- 1 482 831
- DE-B1- 1 482 831
- FR-A1- 2 281 050
- US-B1- 6 526 736

## Description

### Field of the invention

The present invention relates to a harvesting device. The harvesting device is particular suited for agricultural purposes, forestry, horticultural purposes and plant nurseries, e.g. in the collection and removal of structures, items and matter located on and/or in the ground.

In particular, the invention relates to a harvesting device having a plurality of blades arranged in a plurality of axially displaced rows attached to a rotatably mounted mounting member, wherein the rows are configured to cut and/or pick up elements in or on the ground as well as in and on the ground, and wherein the mounting member is provided with one or more displacement members configured to radially displace elements that are arranged between adjacent rows due to rotation of the mounting member. The harvesting device is thereby is not only suited for collecting structures, items and matter located on and in the ground, but also suited for moving the so collected items and matter away from the harvesting device for further transportation.

### Background of the invention

Sorters and rollers are often used for agricultural purposes. After harvesting, remains left in the soil must be removed to prepare the soil for new planting. This is e.g. the case in connection with culture of crops and smaller trees like Christmas trees. Furthermore, in general it may be necessary to remove and collect stones, roots and other debris from the soil before first-time planting in order to improve the quality of the soil, and, thus, improve the growth of the crop planted.

From EP 2 332 663 A1, a harvesting device is known. The device comprises a mounting tube having attached thereto blades with a width in circumferential direction relative to the mounting tube. The device further comprises a number of blades mounted on the mounting tube. The width of each of the blades is identical, and, thus, the items cleaned by the device may fall off sideways.

From US 6,526,736 B1, crop collectors are known. The crop collector comprises i.a. strippers, each constructed of upper and lower halves moulded together. The strippers are each spaced by tooth tines. The strippers further have semi-cylindrical cavities, moulded into the forward ends of the stripper halves, the halves further being provided with respective parts of lugs or tabs, which are interlocked with each other to define a hinge joint between the stripper halves. The upper halves are mounted together with the cylindrical cavities at their forward ends surrounding a tubular, cylindrical tooth mounting shaft to which the blade structures are welded. The upper halves of each stripper are provided with a pair of transversely spaced planar sides that extend perpendicular to the axis of the shaft and terminate in arcuate rims having a minor front section defined at a radius about the center of the semi-cylindrical cavity. The lower stripper halve does not have spaced side walls as the upper stripper halve. As the tines rotate below the upper stripper halves and the bases of the lower stripper halves, they enter the large clearance zone defined between the opposite sides of the base and the rib of each tripper half, into which the collected crop pieces, thereby moving away from the shaft.

From DE 33 27 362 A1, soil cultivating implements are known. The soil cultivating implements have at least one soil working roller with a stripper, where the stripper engages with the tube-shaped roller having a diameter of less than 20 cm. The roller carries a plurality of tooth-like structures mounted on a central support and spaced apart from one another at regular angular intervals. The tooth-like structures are made of pressed metal plates. The tooth-like structures penetrate into the soil during the use of the implements, thereby loosen the soil.

From DE 1 482 831, a harvesting device for e.g. hay and crop or green fodder is known. The harvesting device comprises horizontal, transverse to the direction of travel, juxtaposed, toothed discs and corresponding scrapers. The teeth of the disc are curved and continue evenly in the front edge of the next tooth. Spacers are provided between the discs. To guide the harvested crop, the scrapers may form side edges relative to the spacer against the discs. The distance between the teeth of each disc are thereby fixed, thereby making the harvesting device rigid.

When using the prior art harvesting devices capable of picking up elements such as roots from the soil/ground, the elements picked up may be stuck and damage the harvesting device.

Accordingly, there is a need for an improved harvesting device not possessing these drawbacks.

### Summary of the invention

The object of the present invention can be achieved by a harvesting device as defined in claim 1. Preferred embodiments are defined in the dependent sub claims, explained in the following description and illustrated in the accompanying drawings.

The harvesting device according to the invention is a harvesting device having a plurality of blades arranged in a plurality of axially displaced rows attached to a rotatably mounted mounting member, wherein the rows are configured to cut and/or pick up elements in the ground, and wherein the mounting member is provided with one or more displacement members configured to radially displace elements that are arranged between adjacent rows due to rotation of the mounting member, wherein the blades of one row are angularly displaced relative to the adjacent row, whereby the distal width of the blade is larger than the distance between the distal edges of adjacent blades.

The width of the blade is larger than the distance between the distal edges of adjacent blades. Hereby, the picked-up elements cannot move axially to the adjacent row. In some embodiments, the blades and rows are mounted so as to form a repeated pattern as regards the distance between the distal edges of adjacent blades. The repeated pattern may depend on the number of blades on each row.

Hereby, it is possible to remove elements that are stuck between adjacent rows by radially displacing the elements by means of the one or more displacement members.

The axially displaced rows may comprise any suitable number of blades (e.g. one, two, three, four, five, six, seven, eight, nine, ten or more blades). The blades may preferably be evenly distributed along the periphery of the mounting member. The rows are configured to cut and/or pick up elements in the ground/soil. The number of rows may depend on the intended use and the size of the blades in each row as well as the items to be collected/picked up. In general, the larger the distance between each row, the larger items to be collected/picked up. In general, the smaller the distance between each row, the smaller items to be collected/picked up.

The mounting member is provided with one or more displacement members of any suitable size and geometry enabling the one or more displacement members to radially displace elements that are arranged between adjacent rows due to rotation of the mounting member. The one or more displacement members may include a rail, such as a curved or arched rail.

It may be an advantage that each displacement member is provided with an attachment structure configured to be attached to a support member.

Hereby, it is possible to support the displacement members to the support member and allow axial displacement of the displacement members. Accordingly, it is possible to provide a strong and reliable harvesting device.

It may be beneficial that the displacement member is provided with a fastening member. Hereby, the mounting of the displacement member to the mounting member can be eased.

It may be advantageous that a wear member detachably attached to the mounting member is provided between adjacent rows. Hereby, wear of the mounting member can be reduced or even prevented. Instead the wear members are worn and these wear members can easily be replaced with new ones.

It may be beneficial that each wear member is configured to function as bearing for the displacement member and the fastening member. Hereby, the displacement members are capable of being kept in a fixed rotational position relative to the rotating mounting member.

It may be an advantage that the blade is provided with a wear part. Hereby, the wear part can be replaced instead of replacing the entire blade due to wear. The wear part may be attached to the blade by welding or by use of bolts, rivets or pop rivets, screws and/or locking pins/locking devices.

It may be beneficial that the angle between the blade and the longitudinal axis of the mounting member is 80-100°. Hereby, the optimum conditions may be established in order to pick-up elements from the ground/soil. It is contemplated that the angle may suitably be 81°, 82°, 83°, 84°, 85°, 86°, 87°, 88°, 89°, 90°, 91°, 92°, 93°, 94°, 95°, 96°, 97°, 98°, 99° or 100°. Although the angle is exemplified with integers, it is to be understood that the angle may be any non-integer. In some embodiments, the blades of the various rows may be mounted with different angles. By way of example, some rows may have blades with an angle of 85°, while other rows have blades with an angle of 90°. By way of example, the row at the centre ("centre row") may have blades with an angle of 90°, whereas the rows on each side of the centre row have blades with different angles (e.g. 85° on the one side of the centre row, and e.g. 105° on the other side of the centre row).

It may be an advantage that the harvesting device comprises a grub tooth, or two grub teeth. Hereby, the grub tooth or the two grub teeth can grub the ground/soil and hereby loosen elements to be picked-up by the harvesting device. The grub tooth may have any suitable form. In certain embodiments, the grub tooth is rod-shaped or lance-shaped.

It may be beneficial that each grub tooth is rotatably mounted and configured to rotate about its longitudinal axis. Hereby, elements are prevented from being tangled up.

It may be advantageous that the grub tooth is mounted on each side of the harvesting device. Hereby, it is possible to provide the most efficient harvesting device.

It may be beneficial that each grub tooth is mounted in a bearing attached to a frame of the harvesting device. Hereby, it is possible to provide a reliable attachment of the grub teeth to the frame.

It may be beneficial that the displacement member(s) are arranged between adjacent rows. Hereby, the displacement member(s) are capable of displacing elements being stuck between adjacent rows.

It may be beneficial that the displacement member comprises two separated structures or a first structure and a second structure rotatably attached to the first structure. Hereby, the displacement member can be attached to the mounting member in an easy and user-friendly manner.

It may be an advantage that the wear member is arranged between the displacement member and the mounting member. Hereby, the wear member is capable of reducing or even eliminating the wear of the mounting member.

Each blade in each row is mounted on the mounting member by welding or by use of e.g. bolts, screws, rivets, pop rivets and/or locking pins/locking devices. The blades may be detachably mounted on the mounting member. Thus, the blades may easily be replaced.

For some applications, a wear member may be provided between each row of blades. The wear member may be made of any suitable material, such as metal (e.g. steel and alloys) rubber or a silicone material.

For some applications, the support member may be a shaft or a rod-shaped structure.

For some applications, the mounting member may be a hollow, cylindrical pipe suitable for mounting thereon the various components (like, e.g., rows, blades, displacement members, wear parts and end plates), e.g. using bolts, rivets, pop rivets, screws, locking pins/locking devices, and/or hinges, or by welding. The mounting member may even be made up of a plurality of hollow, cylindrical, ring-shaped structures which can be assembled with the various components (like e.g. rows, blades, displacement members, wear parts and end plates), e.g. by bolts, rivets, screws, locking pins/locking devices, and/or hinges, or by welding. The mounting member may have a diameter suited for mounting or assembling the various attachments. The mounting member may be made of a metal or an alloy.

For some applications, the number of displacement members equals the number of rows. For some applications, a displacement member is present at each side of each row, i.e. the number of displacement members equals the number of rows with the addition of two further displacement members.

Between the displacement member and the fastening member, and the mounting member, a wear member may suitably be provided. Thus, the wear member may form a bearing for the displacement member and the fastening member, which wear member further reduces or even eliminates wearing, when the rows and mounting member are rotated.

In some embodiments, the width of the displacement member increases at least until the length of the displacement member exceeds the length of the blades (i.e. is "free" of the blades). However, it is to be understood that the exact form and the width of the displace member depends on the intended use of the harvesting device and the items to be collected.

The displacement member may suitably be provided with a cavity at the end opposite the mounting member. This cavity may suitably be such which fits a sorting or transportation structure, such as a conveyor belt or rollers.

The displacement member may suitably be made of a metal (e.g. iron, steel or other alloys) or a composite or fibre material.

The displacement member as such is also encompassed by the invention. The displacement member has the form and function as described herein. The displacement member may be used with any harvesting device ("retrofit"). By the term "retrofit" is meant that the displacement member is mounted on a harvesting device subsequently.

When the harvesting device is moved across the ground, the blades are rotated. Thereby, the harvesting device loosens the soil and items/elements located in or on the ground are moved and can be collected. The collected items are moved across the displacement members away from the ground. The collected items may further be cleaned and/or sorted using conveyor belts or other techniques generally known in the art.

In particular, the harvesting device is rotated in an opposite direction relative to direction of movement. Thereby, processing of the soil is achieved. '

For transferring power for rotating the mounting member, the harvesting device may be provided with one, two or more end plates. The end plates may be provided with bores for bolts and/or screws fitting a drive shaft. The end plates may further be provided with a support bearing.

Movement of the harvesting device may be accomplished by methods and techniques generally known in the art. The harvesting device may be powered by means of mechanical, electrical or hydraulic nature. In particular, the harvesting device may be connected to and towed by a vehicle (e.g. a tractor), or the harvesting device may be part of a self-propelling unit.

It is to be understood that when the harvesting device is configured to be moving, the displacement members (e.g. curved or arched rails) are fixed to the frame of the harvesting device. Accordingly, the displacement members rotate relative to the rows of blades.

In a particular embodiment of the harvesting device, one or more grub teeth are mounted. Specifically, a grub tooth may be mounted on each side of the harvesting device. The grub tooth may also be present at the one side only. It is contemplated that each grub tooth may rotate about its longitudinal axis. The rotation may be inwards or outwards relative to the mounting member. If two grub teeth are present, one may rotate inwards and one rotate outwards, or they may both rotate either inwards or outwards. The rotation may be provided by mechanical power, or the rotation may be freely. The grub tooth loosens the soil and items present in the soil, e.g. roots, weed, crops, debris and stones.

In another aspect, the present invention relates to the use of the harvesting device for agricultural purposes and/or for soil treatment. The use is suitably such by which stones, weed, grass and/or roots located on or in the ground as well as on and in the ground are collected and optionally removed from the ground.

In yet another aspect, the present invention relates to the harvesting device for use in soil treatment, whereby the harvesting device is used for collecting and optionally removing stones, weed, grass and/or roots located on or in the ground and in or on as well as in and on sandy areas such as a beach.

### Brief description of the drawings

The invention will become more fully understood from the detailed description given herein. The accompanying drawings are given by way of illustration only, and thus, they are not in any way limitative of the present invention. In the accompanying drawings:
- Fig. 1: shows a schematic, exploded view of some of the main components of the harvesting device according to the invention;
- Fig. 2A: shows a schematic, perspective view of a grub tooth according to one embodiment of the invention;
- Fig. 2C: shows a schematic, perspective view of a displacement member according to another embodiment of the invention;
- Fig. 3: shows a schematic, side view of an embodiment of the harvesting device of the invention;
- Fig. 4: shows a schematic, perspective view of a harvesting device having according to one embodiment of the invention;
- Fig. 5: shows a schematic, perspective side-view of a harvesting device according to the invention;
- Fig. 6: shows a schematic, perspective side-view of another harvesting device according to the invention;
- Fig. 7A: shows a schematic front view of a mounting member and a plurality of rows attached thereto;
- Fig. 7B: shows a schematic close-up view of a part of the mounting member shown in Fig. 7A;
- Fig. 8A: shows a schematic, perspective view of a harvesting device according to the invention having one blade in each row;
- Fig. 8B: shows another schematic, perspective view of the harvesting device shown in Fig. 8A;
- Fig. 8C: shows a schematic, perspective view of a harvesting device according to the invention having two blades in each row;
- Fig. 8D: shows another schematic, perspective view of the harvesting device shown in Fig. 8C;
- Fig. 8E: shows a schematic, perspective view of a harvesting device according to the invention having three blades in each row;
- Fig. 8F: shows another schematic, perspective view of the harvesting device shown in Fig. 8E;
- Fig. 8G: shows a schematic, perspective view of a harvesting device according to the invention having four blades in each row;
- Fig. 8H: shows another schematic, perspective view of the harvesting device shown in Fig. 8F;
- Fig. 9A: shows a schematic, perspective view of a harvesting device according to the invention having five blades in each row;
- Fig. 9B: shows another schematic, perspective view of the harvesting device shown in Fig. 9A;
- Fig. 9C: shows a schematic, perspective view of a harvesting device according to the invention and a transporting device attached thereto.

### Detailed description of the invention

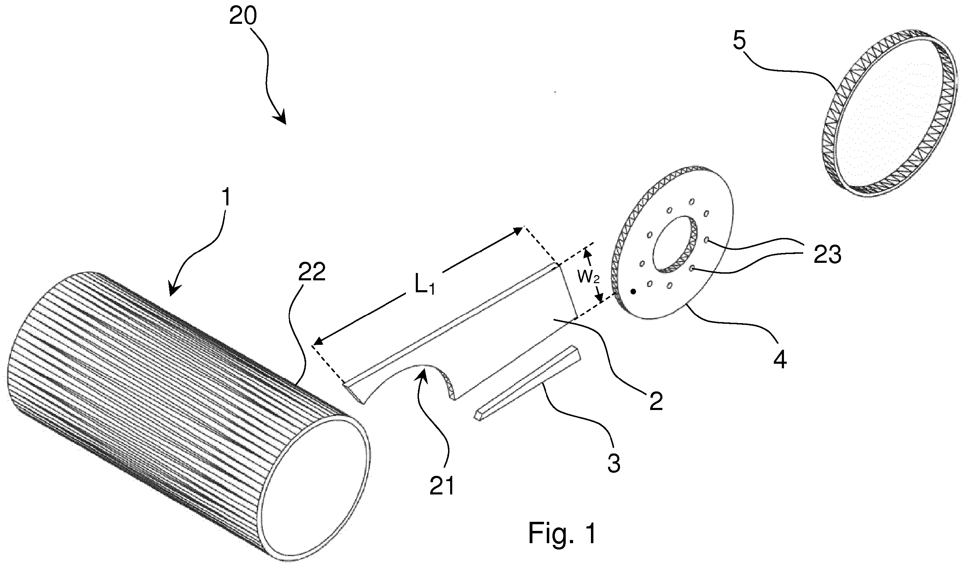

Referring now in detail to the drawings for the purpose of illustrating preferred embodiments of the present invention, a schematic, exploded view of some of the main components of a harvesting device 20 of the present invention is illustrated in Fig. 1.

Fig. 1 illustrates a mounting member 1 formed as a hollow, cylindrical pipe provided with an outer periphery 22 to which a plurality of components can be attached. The mounting member 1 is configured to be mechanically connected to one or more driving units (not shown). Accordingly, the mounting member 1 is configured to transfer mechanical energy from one or more driving units to the components attached to the mounting member 1. The driving unit(s) may be of any suitable type, size and construction. In one embodiment according to the invention, the driving unit(s) may be a hydraulic motor mechanically connected to the mounting member 1 or to an element (e.g. an end plate 4) mechanically connected to the mounting member 1.

In another embodiment of the invention, the mounting member 1 may be provided as a shaft, provided with engagement structures such as teeth or grooves configured to be brought into engagement with corresponding engagement structures such as a chain, a gear or a timing belt.

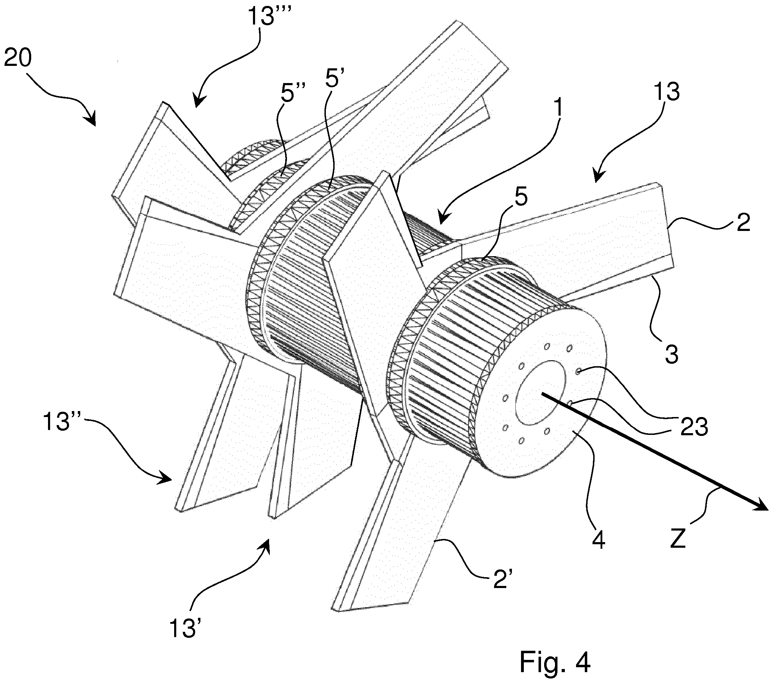

The harvesting device 20 comprises a blade 2 adapted to cut and/or lift structures during operation of the harvesting device 20. When the harvesting device 20 is assembled, the blade 2 is attached to the mounting member 1 (see Fig. 4, Fig. 5, Fig. 6 and Fig. 7). The blade 2 can be detachably attached to the mounting member 1 by providing the outer periphery of the mounting member 1 and the inner periphery 21 of the blade 2 with corresponding engaging structures (e.g. corresponding grooves and protrusions). The blade 2 can be attached to the mounting member 1 by means of welding, or mechanical attachment means such as bolts, rivets, pop rivets, locking pins/locking devices and hinges. Accordingly, when the blade 2 is attached to the mounting member 1, the blade 2 will rotate together, and with the same rotational speed as the mounting member 1.

In order not to replace the blade 2 due to wear, it is possible to mount a wear part 3 to the part of the blade 2 that is subject to the most critical wear. The wear part 3 can be attached to the blade 2 by any suitable means including welding and mechanical attachment based on bolts, rivets or pop rivets. It can be seen that the geometry of the inner periphery 21 of the blade 2 corresponds to the geometry of the outer periphery 22 of the mounting member 1. It can also be seen that the length L₁ of the blade 2 exceeds the width W₂ of the blade 2. It should be noted that the length L₁ of the blade 2 will be slightly larger when the wear part 3 is attached to the blade 2.

An annular end plate 4 provided with a centrally arranged aperture and a plurality of evenly distributed bores 23 is arranged next to the blade 2. The end plate 4 is adapted to be attached to the end portion of the mounting member 1. The end plate 4 can be attached to the end portion of the mounting member 1 by means of any suitable attachment techniques including welding and mechanical attachment structures such as bolts, rivets, pop rivets, locking pins/locking devices and hinges. The end plate 4 can be mechanically connected to a driving unit (not shown) by means of the bores 23 (e.g. by attaching a driving unit to the bores by using e.g. bolts).

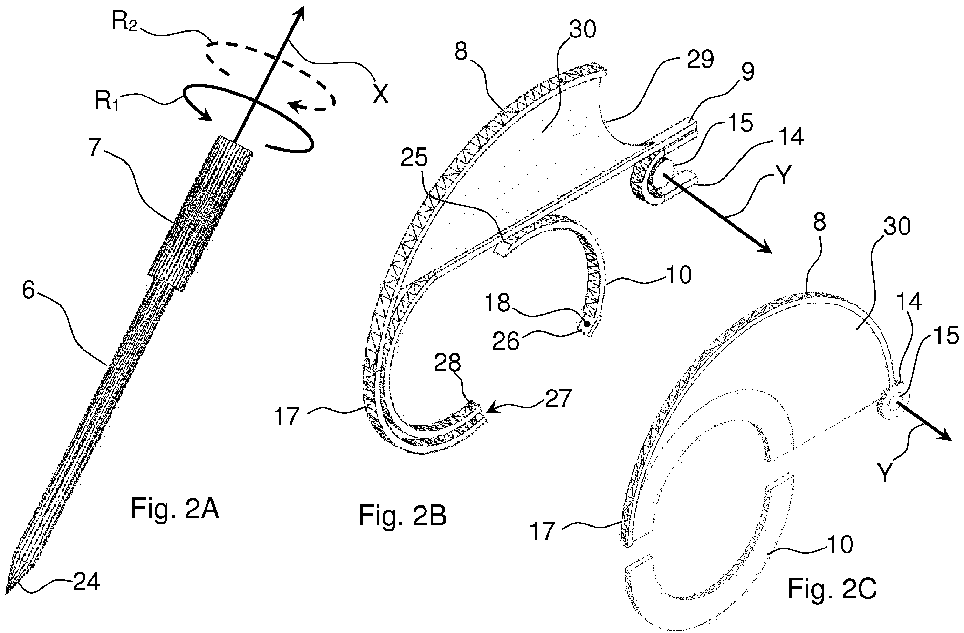

A wear ring 5 is provided next to the end plate 4. The wear ring 5 is adapted to be attached to the mounting member 1 and take up wear due to the motion of the mounting member 1 relative to a fixed structure (shown in Fig. 2B) provided next to the blade 2.

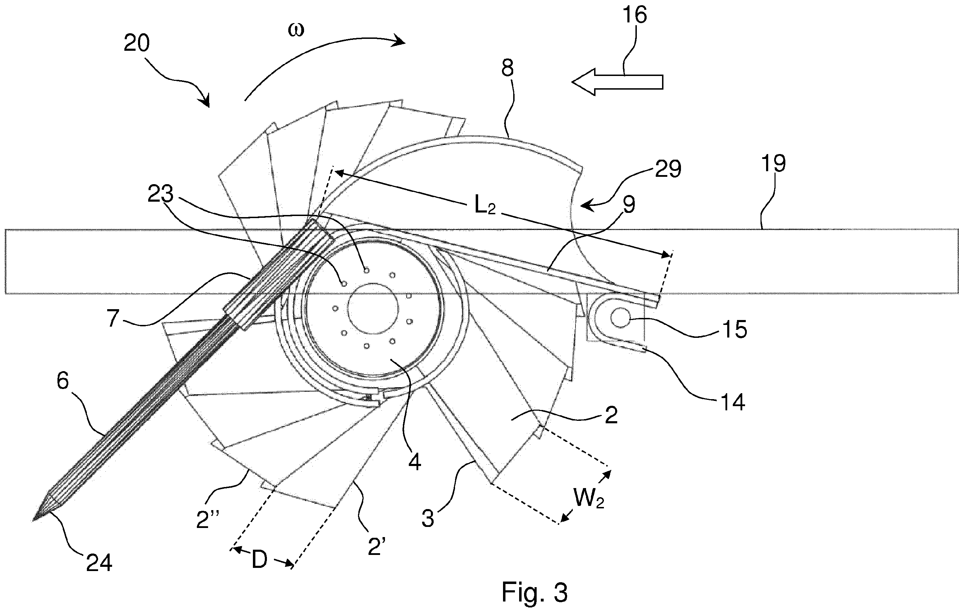

Fig. 2A illustrates a schematic view of a grub tooth 6 according to one embodiment of the invention. The grub tooth 6 is formed as an elongated rod provided with a pointed distal end 24. The grub tooth 6 is joined in an elongated bearing 7. The bearing 7 is configured to be attached to the frame (see Fig. 3, Fig. 5 and Fig. 6) of the harvesting device. When mounted to the frame, the grub tooth 6 can rotate about its longitudinal axis X in either a first rotational direction R₁ or the opposite rotational direction R₂ as indicated.

Fig. 2B illustrates a schematic, perspective view of a first displacement member (here exemplified by a curved rail 8) according to the invention. The rail 8 comprises a fixed portion having an arched structure provided with a circular arched distal portion, in which an attachment element 27 is provided. The rail 8 comprises a rotatably mounted fastening member shaped as a circular arched structure rotatably attached to the fixed portion 17 of the rail 8 by means of a hinged attachment structure 25. The hinged attachment structure 25 is provided with an attachment member 26 adapted to be mechanically attached to the attachment element 27 of the fixed portion 17 of the rail 8 by means of a locking pin 28 that is configured to be inserted into a bore 18 provided in the plate-shaped attachment member 26.

The rail 8 comprises a rod member 9 and a reinforcement structure 30 provided as a plate extending between the rod member 9 and the outer periphery of the rail 8. The reinforcement structure 30 increases the mechanical strength and stiffness of the rail 8. Although exemplified as a plate-shaped structure, it is to be understood that the reinforcement structure 30 could have any suitable shape to withstand the pressure between the rail 8 and the rod member 9. An arched portion 29 is provided in the distal end of the reinforcement structure 30.

The rail 8 comprises a U-shaped attachment structure 14 attached to the rod member 9. The attachment structure 14 is detachably attached to a support member 15 shaped as a shaft having a longitudinal axis Y. The rail 8 is configured to be detachably attached to a mounting member 1 as the one shown in Fig. 1. When the rail 8 is attached to the harvesting device, the rail 8 is axially slidably. Accordingly, the rail 8 can move due to contact forces. Accordingly, the rail 8 will rather be displaced than be deformed when exposed to large forces and impacts.

Fig. 2C illustrates a schematic, perspective view of a second curved rail 8 (example of displacement member) according to the invention. The rail 8 comprises a first fixed 17 portion having an arched structure. The rail 8 further comprises a second portion 10 (a fastening member) adapted to be attached to the fixed portion 17 e.g. by means of welding or mechanical attachment structures. The rail 8 comprises a plate-shaped reinforcement structure 30 and an annular attachment structure 14 adapted to be slidably attached to a support member 15 shaped as a shaft having a longitudinal axis Y. The rail 8 is configured to be detachably attached to a mounting member 1 as the one shown in Fig. 1. When the rail 8 is mounted on the mounting member of the harvesting device, the rail 8 is capable of being moved axially along the mounting member. Therefore, the rail 8 can move axially when exposed to large forces and impacts.

Fig. 3 illustrates a schematic side view of a harvesting device 20 according to the invention. The harvesting device 20 comprises a frame 19 and a support member 15 attached thereto. The harvesting device 20 comprises a grub tooth 6 having a distal end formed as a pointed end 24. The grub tooth 6 is joined in an elongated bearing 7 attached to the frame 19 (e.g. by welding or by means of mechanical attachment elements such as bolts, rivets, pop rivets, locking pins/locking devices and hinges).

The harvesting device 20 is provided with an end plate 4 attached to a cylindrical mounting member (not shown). The end plate 4 is provided with bores 23 for attachment of a driving unit (not shown). The harvesting device 20 comprises a plurality of blades 2, 2', 2" arranged in rows of three and fixed to the mounting member. The width W₂ of the blades 2, 2', 2" as well as the distance D between adjacent blades 2, 2', 2" (arranged in adjacent rows) are indicated in Fig. 3. The blades 2, 2', 2" of one row are angular displaced relative to the adjacent row. The distance between D adjacent blades 2, 2', 2" of adjacent rows are smaller than the width W₂ of the blade 2, 2', 2".

It can be seen that harvesting device 20 comprises a displacement member 8 formed as a curved rail 8. The rail is rotatably attached to the mounting member. Therefore, the rail 8 remains in a fixed position relative to frame when the mounting member rotates. The rail 8 comprises a rod member 9 and a C-shaped attachment structure 14 attached to an elongated support member 15 formed as a shaft extending parallel to the longitudinal axis of the mounting member. The length L₂ of the rail 8 is indicated. In one embodiment according to the invention a rail 8 is arranged between all adjacent rows.

The direction of travel 16 of the harvesting device 20 as well as the rotational direction ω of the mounting member, the end plate 4 attached thereto and the blades 2 fixed to the mounting member are indicated in Fig. 3.

The rail 8 is provided with an arced distal portion 29. The arched portion 29 allows for arrangement of a transportation device.

The distance D between adjacent blades 2, 2', 2" (arranged in adjacent rows) needs to be smaller than the size (the largest dimension) of the elements to be picked up by using the harvesting device 20.

The number of rows depends on the working width of the harvesting device 20.

Fig. 4 illustrates a schematic, perspective top view of a harvesting device 20 according to the invention. The harvesting device 20 comprises a cylindrical mounting member 1. A plurality of axially displaced rows 13, 13', 13', 13"' of blades 2, 2', 2" are fixed to the mounting member 1. Accordingly, the blades 2, 2', 2" will rotate with the same rotational speed as the mounting member 1. It should be noted that the displacement members (rails) arranged between the rows as well as a plurality of the rows have been removed from the mounting member 1 for illustrative purposes.

Ring-shaped wear members 5, 5', 5" (wear rings) are arranged between adjacent rows 13, 13, 13", 13"'. The wear rings 5, 5', 5" are arranged and configured to take up wear originating from the rotating displacement members (rails) (not shown). Therefore, the wear rings 5, 5', 5" will be worn instead of the mounting member 1. The rotating displacement members (rails) can be axially displaced along the longitudinal axis Z of the mounting member 1.

An end plate 4 is attached to the mounting member 1. The end plate 4 is provided with a centrally arranged circular bore and a plurality of smaller bores (preferably threaded bores) 23 for attaching a driving unit (not shown) to the end plate 4.

The blades 2, 2' are provided with a wear part 3 attached thereto (e.g. by welding or by means of mechanical attachment structures such as bolts, rivets, pop rivet, locking pins/locking devices and hinges). Hereby, it is possible to replace only the wear part 3 instead of replacing the entire blade 2, 2' in case of wear.

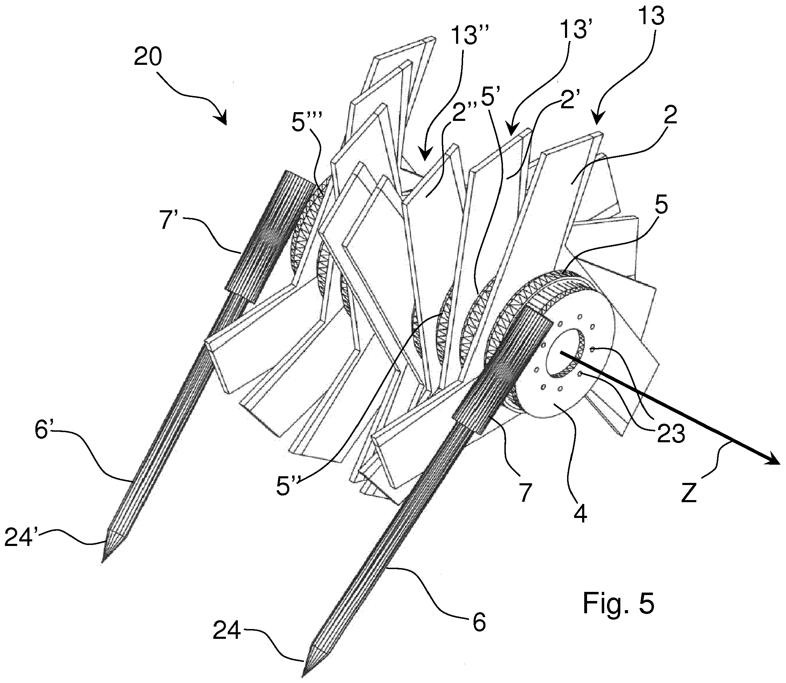

Fig. 5 illustrates a schematic, perspective top view of a harvesting device 20 according to one embodiment of the invention. The harvesting device 20 comprises a cylindrical mounting member to which a plurality of axially displaced rows 13, 13', 13" are fixed. A wear ring 5, 5', 5", 5'" is arranged between all adjacent rows 13, 13', 13" to reduce wear of the mounting member caused by rotation and axial displacement (along the longitudinal axis Z of the mounting member) of displacement members (not shown) arranged between the adjacent rows 13, 13', 13".

The embodiment shown in Fig. 5 is provided with a first grub tooth 6 arranged at one side of the harvesting device 20 and a second grub tooth 6' arranged at the opposite side of the harvesting device 20. Each grub tooth 6, 6' is joined in an elongated bearing 7, 7'. The bearings 7, 7' are attached to the frame (not shown) of the harvesting device 20. Each grub tooth 6, 6' comprises a pointed end 24, 24' configured to be ground engaging. Accordingly, each grub tooth 6, 6' can loosen roots and other elements in the ground/soil and hereby grub the ground/soil.

The width W₂ of the blades 2, 2', 2" prevents elements (e.g. roots) caught by the blades 2, 2', 2" of the harvesting device 20 to pass through the rear portion of a blade 2, 2', 2" and the front portion of the adjacent blade 2, 2', 2".

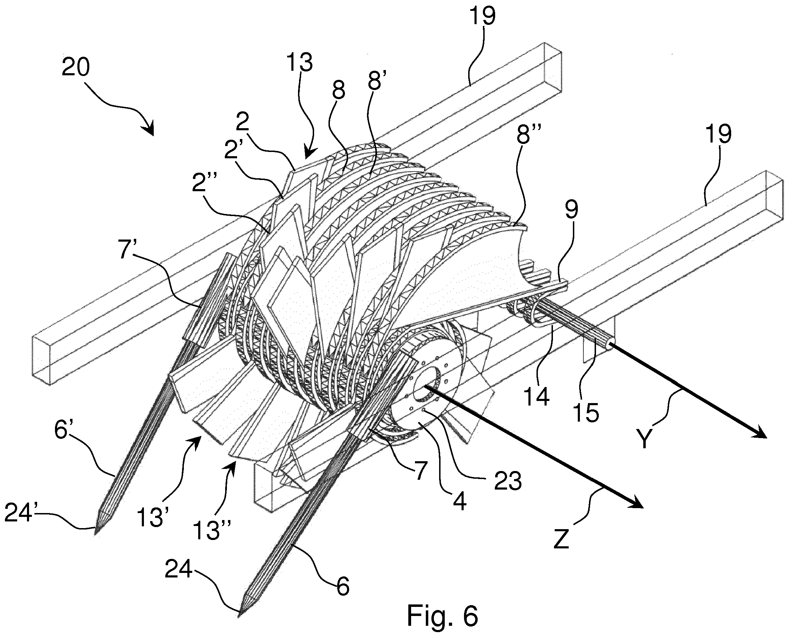

Fig. 6 illustrates a perspective top view of a harvesting device 20 according to an embodiment of the invention. The harvesting device 20 comprises a cylindrical mounting member to which a plurality of axially displaced rows 13, 13', 13" are attached (e.g. by means of welding or mechanical attachment elements such as bolts, rivets, pop rivets, locking pins/locking devices and hinges).

An end plate 4 is attached to the mounting member for enabling fixation of a driving unit (not shown), e.g. by means of the bores 23 provided in the end plate 4. Each row 13, 13', 13" of the harvesting device 20 comprises three blades 2, 2', 2", however, the number of blades 2, 2', 2" in each row 13, 13', 13" may be lower (e.g. one or two blades 2, 2', 2" in each row 13, 13', 13") or be larger (e.g. four, five, six, seven, eight, nine, ten or more blades 2, 2', 2" in each row 13, 13', 13"). It can be seen that a displacement member (rail) 8, 8' is arranged between each set of adjacent rows 13, 13', 13". Accordingly, the displacement members (rails) 8, 8', 8" can radially displace elements (e.g. roots) that get stuck between adjacent rows 13, 13', 13" due to rotation of the mounting member 1. The geometry of the displacement members (rails) 8, 8', 8" ensures that elements (e.g. roots) that get stuck between adjacent rows 13, 13', 13" are gradually displaced radially as the mounting member is rotated and thus angular displaced relative to the displacement members (rails) 8, 8', 8".

The outer periphery of the displacement members (rails) 8, 8', 8" have an increasing radius as function of the angular position. Accordingly, elements (e.g. roots) that get stuck between adjacent rows 13, 13', 13" due to rotation of the mounting member 1 will be radially displaced by the displacement members (rails) 8, 8', 8" until the elements (e.g. roots) are loosened from the adjacent rows 13, 13', 13".

The harvesting device 20 comprises a frame 19 provided with two parallel elongated bars extending perpendicular to the longitudinal axis Z of the mounting member. The harvesting device 20 comprises a support member 15 shaped as an elongated rod (shaft) having a longitudinal axis Y extending parallel to the longitudinal axis Z of the mounting member.

Each displacement member (rail) 8, 8' is slidably attached to the support member 15 by means of an attachment structure 14. The attachment structure 14 is attached to a rod member 9 of the displacement member (rail) 8, 8', 8".

The harvesting device 20 comprises a first grub tooth 6 arranged at one side of the harvesting device 20 and a second grub tooth 6' arranged at the opposite side of the harvesting device 20. Each grub tooth 6, 6' is joined in an elongated bearing 7, 7'. The bearings 7, 7' are fixed to the frame 19 of the harvesting device 20 e.g. by welding or by mechanical fastening means such as bolts, rivets or pop rivets. Each grub tooth 6, 6' is provided with a pointed end 24, 24' adapted to be ground engaging. Accordingly, each grub tooth 6, 6' can loosen roots and other elements in the ground/soil and hereby grub the ground/soil.

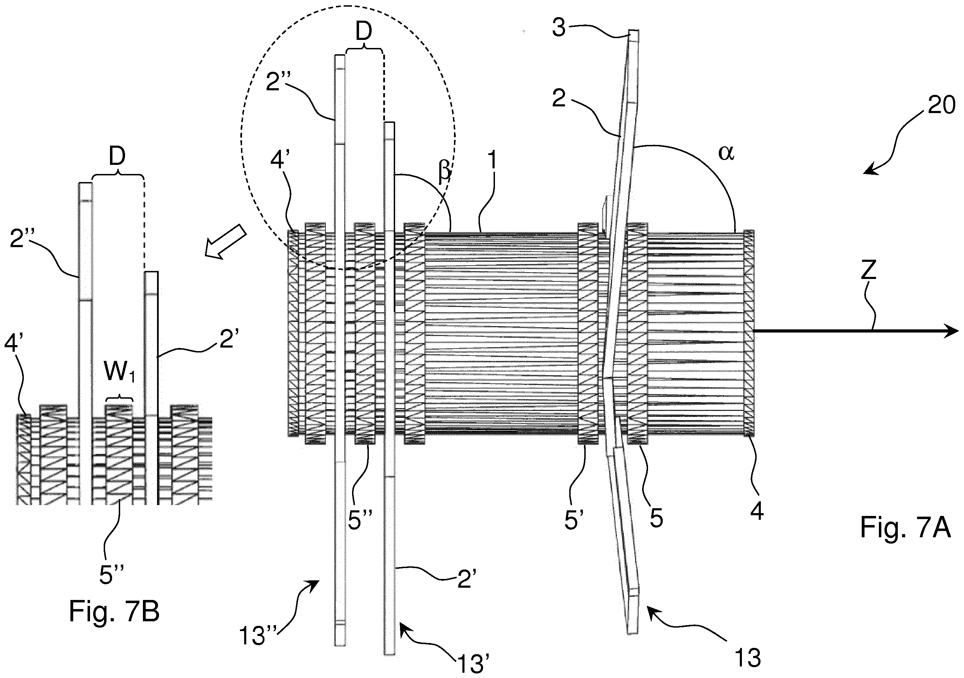

Fig. 7A illustrates a schematic front view of a harvesting device 20 according to one embodiment of the invention. The harvesting device 20 comprises a cylindrical mounting member 1 provided with a first end plate 4 attached to the right end of the mounting member 1 and a second end plate 4' attached to the left end of the mounting member 1. The mounting member 1 has a longitudinal axis Z.

A plurality of rows 13, 13', 13" of blades 2, 2', 2" are attached to the mounting member 1. The attachment of the blades 2, 2', 2" to the mounting member 1 may be carried out by means of any suitable fastenings means including welding and mechanical attachment structures such as bolts, rivets, pop rivets, locking pins/locking devices and hinges. The distance D between adjacent rows 13', 13" is indicated in Fig. 7.

It should be stressed that the displacement members (rails) arranged between the rows 13, 13, 13" as well as a plurality of the rows have been removed from the mounting member 1 for illustrative purposes.

The angle α between the blade 2 and the longitudinal axis Z of the mounting member 1 is approximately 85 degrees, whereas the angle β between the blade 2' and the longitudinal axis Z of the mounting member 1 is approximately 90 degrees. The angles α, β between the blades 2, 2', 2" and the longitudinal axis Z of the mounting member 1 may be varied within the range 80-100 degrees. The blades 2, 2', 2" are provided with a wear part 3. It can be seen that a wear ring 5, 5', 5" is arranged between adjacent rows 13, 13', 13".

Fig. 7B illustrates a close-up view of a portion of the harvesting device 20 shown in Fig. 7A. It can be seen that the wear ring 5" is arranged to be axially displaced along the longitudinal axis Z of the mounting member 1 since the width W₁ of the wear ring 5" is smaller than the distance D between the adjacent rows 13', 13".

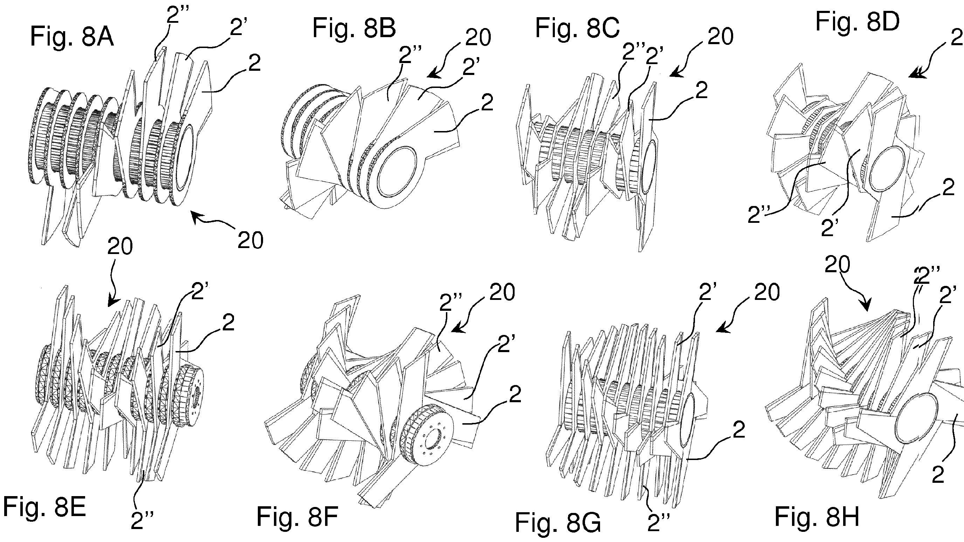

Fig. 8A illustrates schematic, perspective view of a harvesting device 20 according to the invention having one blade 2, 2', 2" in each row. Fig. 8B illustrates another schematic, perspective view of the harvesting device 20 shown in Fig. 8A.

Fig. 8C illustrates a schematic, perspective view of a harvesting device 20 according to the invention having two blades 2, 2', 2" in each row and Fig. 8D illustrates another schematic, perspective view of the harvesting device 20 shown in Fig. 8C. It can be seen that the blades 2, 2', 2" are evenly distributed along the periphery of the cylindrical mounting member whereto the blades 2, 2', 2" are attached.

Fig. 8E illustrates a schematic, perspective view of a harvesting device 20 according to the invention having three blades 2, 2', 2" in each row and Fig. 8F illustrates another schematic, perspective view of the harvesting device 20 shown in Fig. 8E. The blades 2, 2', 2" are evenly distributed along the periphery of the cylindrical mounting member whereto the blades 2, 2', 2" are attached.

Fig. 8G illustrates a schematic, perspective view of a harvesting device 20 according to the invention having four blades 2, 2', 2" in each row, whereas Fig. 8H illustrates another schematic, perspective view of the harvesting device 20 shown in Fig. 8F. The blades 2, 2', 2" are evenly distributed along the periphery of the cylindrical mounting member whereto the blades 2, 2', 2" are attached.

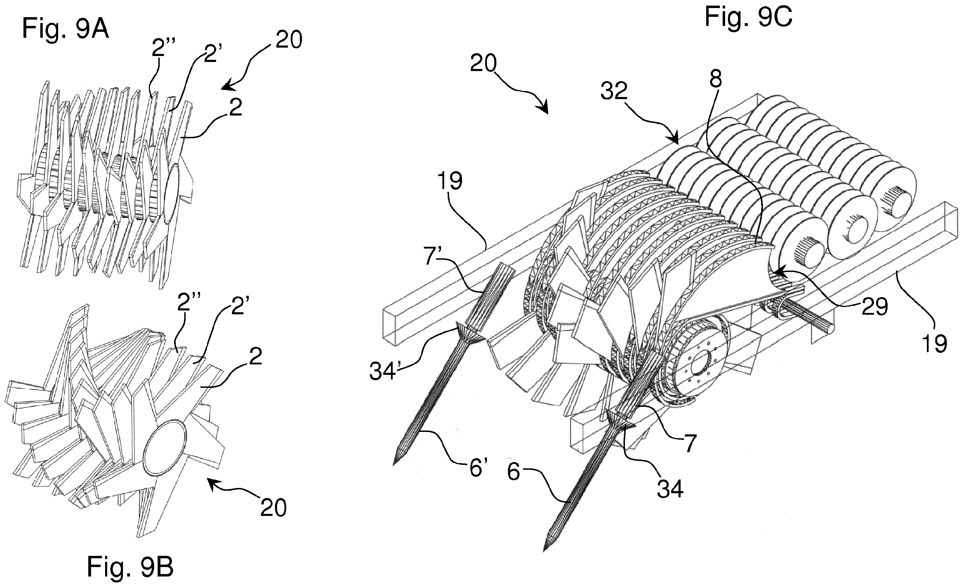

Fig. 9A illustrates a schematic, perspective view of a harvesting device 20 according to the invention having five blades 2, 2', 2" in each row and Fig. 9B illustrates another schematic, perspective view of the harvesting device shown in Fig. 9A. The blades 2, 2', 2" are evenly distributed along the periphery of the cylindrical mounting member whereto the blades 2, 2', 2" are attached.

Fig. 9C illustrates a schematic, perspective view of a harvesting device 20 according to the invention and a transporting device 32 attached thereto. The transporting device 32 is arranged close to the arched portion 29 of the displacement members (rails) 8 of the harvesting device 20. The harvesting device 20 comprises a frame 19 to and two grub teeth 6, 6' each being joined in an elongated bearing 7, 7' attached to the frame 19 of the harvesting device 20. The grub teeth 6, 6' are provided with protection shields 34, 34' arranged under the bearing 7, 7' to protect the bearing 7, 7' against soil and fragments from the ground.

### List of reference numerals

- 1: Mounting member
- 2, 2', 2": Blade
- 3: Wearing part
- 4, 4': End plate
- 5, 5', 5", 5'": Wearing member
- 6, 6': Grub tooth
- 7, 7': Bearing
- 8, 8', 8": Displacement member (rail)
- 9: Rod member
- 10: Fastening member
- 12: Distal edge
- 13, 13', 13", 13"': Row
- 14: Attachment structure
- 15: Support member
- 16: Direction
- 17: Fixed portion
- 18: Bore
- 19: Frame
- 20: Harvesting device
- 21: Inner periphery
- 22: Outer periphery
- 23: Bore
- 24, 24': Pointed end
- 25: Hinged attachment structure
- 26: Attachment member
- 27: Attachment element
- 28: Locking pin
- 29: Arced portion
- 30: Reinforcement structure
- 32: Transporting device
- 34, 34': Protection shield
- ω: Rotational direction
- α, β: Angle
- R₁, R₂: Rotational direction
- W₁, W₂: Width
- L₁, L₂: Length
- D: Distance
- X, Y, Z: Longitudinal axis

## Claims

1. Harvesting device (20) having a plurality of blades (2, 2', 2") arranged in a plurality of axially displaced rows (13, 13', 13") attached to a rotatably mounted mounting member (1), wherein the rows (13, 13', 13") are configured to cut and/or pick up elements in the ground, wherein the mounting member (1) is provided with one or more displacement members (8) configured to radially displace elements that are arranged between adjacent rows (13, 13', 13") due to rotation of the mounting member (1), **characterised in that** the blades (2, 2', 2") of one row (13, 13', 13") are angularly displaced relative to the adjacent row (13, 13', 13"), and **in that** the distal width (W₂) of the blade (2') is larger than the distance (D) between the distal edges of adjacent blades (2, 2").

2. Harvesting device (20) according to claim 1, **characterised in that** the displacement members (8) are configured to move axially along the mounting member (1).

3. Harvesting device (20) according to claim 1 or 2, **characterised in that** each displacement member (8) is provided with an attachment structure (14) configured to be attached to a support member (15).

4. Harvesting device (20) according to any one of claims 1-3, **characterised in that** the displacement member (8) is provided with a fastening member (10).

5. Harvesting device (20) according to any one of claims 1-4, **characterised in that** a wear member (5) detachably attached to the mounting member (1) is provided between adjacent rows (13, 13', 13") and is arranged between the displacement member (8) and the mounting member (1).

6. Harvesting device (20) according to claim 5, **characterised in that** the wear member (5) has a width (W₁) that is smaller than the distance (D) between adjacent rows (13, 13', 13").

7. Harvesting device (20) according to claim 5 or 6, **characterised in that** each wear member (5) is configured to function as bearing for the displacement member (8) and the fastening member (10).

8. Harvesting device (20) according to any one of claims 1-7, **characterised in that** the blade (2) is provided with a wear part (3).

9. Harvesting device (20) according to any one of claims 1-8, **characterised in that** the angle (α) between the blade (2, 2', 2") and the longitudinal axis (Z) of the mounting member (1) is 80°-100°.

10. Harvesting device (20) according to any one of claims 1-9, **characterised in that** it further comprises a grub tooth (6, 6') or two grub teeth (6, 6').

11. Harvesting device (20) according to claim 10, **characterised in that** each grub tooth (6, 6') is rotatably mounted and configured to rotate about its longitudinal axis (X).

12. Harvesting device (20) according to any one of claims 10-11, **characterised in that** the grub tooth (6, 6') is mounted on each side of the harvesting device (20).

13. Harvesting device (20) according to any one of claims 10-12, **characterised in that** each grub tooth (6, 6') is mounted in a bearing (7, 7') attached to a frame (19) of the harvesting device (20).

14. Harvesting device (20) according to one of the preceding claims, **characterised in that** the displacement member(s) (8) are arranged between adjacent rows (13, 13', 13").

15. Harvesting device (20) according to one of the preceding claims, **characterised in that** the displacement member (8) comprises two separated structures or a first structure and a second structure rotatably attached to the first structure.

## Patentansprüche

1. Erntevorrichtung (20) mit einer Vielzahl von Messern (2, 2', 2"), die in einer Vielzahl von axial verschobenen Reihen (13, 13', 13") angeordnet sind, die an einem drehbar angebrachten Anbringungselement (1) befestigt sind, wobei die Reihen (13, 13', 13")konfiguriert sind, um Elemente im Boden zu schneiden und/oder aufzunehmen, wobei das Anbringungselement (1) mit einem oder mehreren Verschiebungselementen (8) bereitgestellt ist, die konfiguriert sind, um Elemente, die zwischen benachbarten Reihen (13, 13', 13") angeordnet sind, aufgrund einer Drehung des Anbringungselements (1) radial zu verschieben, **dadurch gekennzeichnet, dass** die Messer (2, 2', 2") einer Reihe (13, 13', 13") winkelig in Bezug auf die benachbarte Reihe (13, 13', 13") verschoben sind, und dass die distale Breite (W₂) des Messers (2') größer ist als der Abstand (D) zwischen den distalen Kanten benachbarter Messer (2, 2").

2. Erntevorrichtung (20) nach Anspruch 1, **dadurch gekennzeichnet, dass** die Verschiebungselemente (8) konfiguriert sind, um sich axial entlang des Anbringungselements (1) zu bewegen.

3. Erntevorrichtung (20) nach Anspruch 1 oder 2, **dadurch gekennzeichnet, dass** jedes Verschiebungselement (8) mit einer Befestigungsstruktur (14) bereitgestellt ist, die konfiguriert ist, um an einem Trägerelement (15) befestigt zu werden.

4. Erntevorrichtung (20) nach einem der Ansprüche 1 - 3, **dadurch gekennzeichnet, dass** das Verschiebungselement (8) mit einem Befestigungselement (10) bereitgestellt ist.

5. Erntevorrichtung (20) nach einem der Ansprüche 1 - 4, **dadurch gekennzeichnet, dass** ein am Anbringungselement (1) lösbar befestigtes Verschleißelement (5) zwischen benachbarten Reihen (13, 13', 13") bereitgestellt ist und zwischen dem Verschiebungselementen (8) und dem Anbringungselement (1) angeordnet ist.

6. Erntevorrichtung (20) nach Anspruch 5, **dadurch gekennzeichnet, dass** das Verschleißelement (5) eine Breite (W₁) aufweist, die kleiner als der Abstand (D) benachbarter Reihen (13, 13', 13") ist.

7. Erntevorrichtung (20) nach Anspruch 5 oder 6, **dadurch gekennzeichnet, dass** jedes Verschleißelement (5) konfiguriert ist, um als Lager für das Verschiebungselement (8) und das Befestigungselement (10) zu fungieren.

8. Erntevorrichtung (20) nach einem der Ansprüche 1 - 7, **dadurch gekennzeichnet, dass** das Messer (2) mit einem Verschleißteil (3) bereitgestellt ist.

9. Erntevorrichtung (20) nach einem der Ansprüche 1 - 8, **dadurch gekennzeichnet, dass** der Winkel (α) zwischen dem Messer (2, 2', 2") und der Längsachse (Z) des Anbringungselements (1) 80° - 100° beträgt.

10. Erntevorrichtung (20) nach einem der Ansprüche 1 - 9, **dadurch gekennzeichnet, dass** sie ferner einen Grabzahn (6, 6') oder zwei Grabzähne (6, 6') umfasst.

11. Erntevorrichtung (20) nach Anspruch 10, **dadurch gekennzeichnet, dass** jeder Grabzahn (6, 6') drehbar angebracht ist und konfiguriert ist, um sich um seine Längsachse (X) zu drehen.

12. Erntevorrichtung (20) nach einem der Ansprüche 10 - 11, **dadurch gekennzeichnet, dass** der Grabzahn (6, 6')an jeder Seite der Erntevorrichtung (20) angebracht ist.

13. Erntevorrichtung (20) nach einem der Ansprüche 10 - 12, **dadurch gekennzeichnet, dass** jeder Grabzahn (6, 6')in einem Lager (7, 7') angebracht ist, das an einem Rahmen (19) der Erntevorrichtung (20) befestigt ist.

14. Erntevorrichtung (20) nach einem der vorhergehenden Ansprüche, **dadurch gekennzeichnet, dass** das/die Verschiebungselement(e) (8) zwischen benachbarten Reihen (13, 13', 13") angeordnet sind.

15. Erntevorrichtung (20) nach einem der vorhergehenden Ansprüche, **dadurch gekennzeichnet, dass** das Verschiebungselement (8) zwei getrennte Strukturen oder eine erste Struktur und eine zweite Struktur umfasst, die drehbar an der ersten Struktur befestigt ist.

## Revendications

1. Dispositif de récolte (20) comprenant une pluralité de lames (2, 2', 2") agencées dans une pluralité de rangées déplacées axialement (13, 13', 13") attachées à un élément de montage monté en rotation (1), les rangées (13, 13', 13") étant configurées pour couper et/ou ramasser des éléments dans le sol, l'élément de montage (1) étant muni d'un ou de plusieurs éléments de déplacement (8) configurés pour déplacer radialement des éléments qui sont agencés entre des rangées adjacentes (13, 13', 13") en raison d'une rotation de l'élément de montage (1), **caractérisé en ce que** les lames (2, 2', 2") d'une rangée (13, 13', 13") sont déplacées angulairement par rapport à la rangée adjacente (13, 13', 13"), et **en ce que** la largeur distale (W2) de la lame (2') est plus grande que la distance (D) entre les bords distaux de lames adjacentes (2, 2").

2. Dispositif de récolte (20) selon la revendication 1, **caractérisé en ce que** les éléments de déplacement (8) sont configurés pour bouger axialement le long de l'élément de montage (1).

3. Dispositif de récolte (20) selon la revendication 1 ou 2, **caractérisé en ce que** chaque élément de déplacement (8) est muni d'une structure d'attache (14) configurée pour être attachée à un élément support (15).

4. Dispositif de récolte (20) selon l'une quelconque des revendications 1 à 3, **caractérisé en ce que** l'élément de déplacement (8) est muni d'un élément de fixation (10).

5. Dispositif de récolte (20) selon l'une quelconque des revendications 1 à 4, **caractérisé en ce qu'**un élément d'usure (5) attaché de manière amovible à l'élément de montage (1) est prévu entre des rangées adjacentes (13, 13', 13") et est agencé entre l'élément de déplacement (8) et l'élément de montage (1).

6. Dispositif de récolte (20) selon la revendication 5, **caractérisé en ce que** l'élément d'usure (5) présente une largeur (W₁) qui est plus petite que la distance (D) entre des rangées adjacentes (13, 13', 13").

7. Dispositif de récolte (20) selon la revendication 5 ou 6, **caractérisé en ce que** chaque élément d'usure (5) est configuré pour fonctionner en tant que palier pour l'élément de déplacement (8) et l'élément de fixation (10).

8. Dispositif de récolte (20) selon l'une quelconque des revendications 1 à 7, **caractérisé en ce que** la lame (2) est munie d'une partie d'usure (3).

9. Dispositif de récolte (20) selon l'une quelconque des revendications 1 à 8, **caractérisé en ce que** l'angle (a) entre la lame (2, 2', 2") et l'axe longitudinal (Z) de l'élément de montage (1) est de 80° à 100°.

10. Dispositif de récolte (20) selon l'une quelconque des revendications 1 à 9, **caractérisé en ce qu'**il comprend en outre une dent de creusement (6, 6') ou deux dents de creusement (6, 6').

11. Dispositif de récolte (20) selon la revendication 10, **caractérisé en ce que** chaque dent de creusement (6, 6') est montée en rotation et configurée pour tourner autour de son axe longitudinal (X).

12. Dispositif de récolte (20) selon l'une quelconque des revendications 10 à 11, **caractérisé en ce que** la dent de creusement (6, 6') est montée sur chaque côté du dispositif de récolte (20).

13. Dispositif de récolte (20) selon l'une quelconque des revendications 10 à 12, **caractérisé en ce que** chaque dent de creusement (6, 6') est montée dans un palier (7, 7') attaché à un cadre (19) du dispositif de récolte (20).

14. Dispositif de récolte (20) selon l'une quelconque des revendications précédentes, **caractérisé en ce que** le ou les éléments de déplacement (8) sont agencés entre des rangées adjacentes (13, 13', 13").

15. Dispositif de récolte (20) selon l'une quelconque des revendications précédentes, **caractérisé en ce que** l'élément de déplacement (8) comprend deux structures séparées ou une première structure et une seconde structure attachée en rotation à la première structure.
